# EUROPEAN PATENT SPECIFICATION

(11) **EP 0 642 539 B1**
(45) Date of publication and mention of the grant of the patent: **18.04.2001**
(21) Application number: 93914160.2
(22) Date of filing: 26.05.1993
(51) Int. Cl.: C08F 8/00

(54) **REACTIVE, LOW MOLECULAR WEIGHT, VISCOUS POLY(1-OLEFINS) AND COPOLY(1-OLEFINS) AND THEIR METHOD OF MANUFACTURE**
REAKTIVE VISKOSE OLEFINPOLYMERE UND COPOLYMERE MIT NIEDRIGEM MOLEKULARGEWICHT UND VERFAHREN ZUR HERSTELLUNG DAVON
POLY(1-OLEFINES) ET COPOLY(1-OLEFINES) VISQUEUSES, REACTIVES, ET DE FAIBLE MASSE MOLECULAIRE, ET PROCEDE DE FABRICATION

(30) Priority: 26.05.1992 US 889045
(43) Date of publication of application: 15.03.1995
(73) Proprietor: BP Amoco Corporation, Chicago, IL 60680-0703 (US)
(72) Inventor: BAGHERI, Vahid, Winfiled, IL 60190-1145 (US); FIRTH, Bruce, E., Buffalo Grove, IL 60089 (US); MONEY, Joanna, K. 14/F Villa Elegance, Hong Kong (HK); MOORE, Eric, J., Carol Stream, IL 60188 (US); CALABRESE, Frank, Streamwood, IL 60107 (US); HENSEY, R., Scott, West Chicago, IL 60185 (US)
(74) Representative: Schlich, George William
(86) International application number: US9304991
(87) International publication number: WO9324539

(56) References cited:
- EP-A- 0 200 351
- EP-A- 0 252 372
- EP-A- 0 268 214
- EP-A- 0 294 942
- EP-A- 0 295 026
- EP-A- 0 355 895
- EP-A- 0 418 556
- EP-A- 0 457 599
- EP-A- 0 487 278
- EP-A- 0 490 454
- EP-A- 0 522 375
- WO-A-90/05711
- US-A- 4 238 628
- US-A- 4 542 199
- US-A- 4 814 540
- CHEMICAL ABSTRACTS, vol. 111, no. 16, 16 October 1989, Columbus, Ohio, US; abstract no. 134952f, NODA, KOJI 'HYDROXY- OR METALOXY-CONTAINING ISOBUTYLENE POLYMERS AND THEIR PREPARATION' page 14 ; & JP,A,01 009 203 (KANEGAFUCHI CHEMICAL INDUSTRY CO., LTD.) 12 January 1989

## Description

### Background Of The Invention

This invention relates to the catalyzed preparation and reactions of a reactive, low molecular weight, viscous, essentially-1-olefin-containing poly(1-olefin) or copoly(1-olefin) prepared employing a catalyst comprising a Periodic Group IVb metallocene and an aluminoxane, and more particularly to the catalyzed preparation and reactions of a reactive, low molecular weight, viscous essentially-1-olefin-containing poly(1-olefin) or copoly(1-olefin) prepared from a feed stock containing one or more C₃ to C₂₀ 1-olefin and other volatile hydrocarbon liquids. The viscous polymers of this invention are essentially terminally-unsaturated poly(1-olefin)s or copoly(1-olefin)s with such terminal unsaturation being more than 80% vinylidine type made by a catalyst system using a Periodic Group IVb metallocene and an aluminoxane.

A number of patents and other publications have described the use of transition element, including those of Periodic Group IVb, metallocene/aluminoxane catalysts (supported or unsupported) for the polymerization of 1-olefins and certain cycloalkenes such as ethylene, propylene, butene-1, hexene-1, octene-1, styrene, cyclobutene, cyclopentene, and norbornene. The catalysts are said to have advantages which include increased polymerization activity, the ability to produce some terminal unsaturation and a narrow molecular weight distribution in the product polymer, and the ability to precisely choose polymer stereo regularity. See U.S. Patent Nos. 4,530,914; 4,752,597; 4,808,561; and 5,001,244. See also U.S. Patent No. 4,542,199 where polymerization of olefins of formula CH₂CHR in which R is H or C₁ to C₁₀ alkyl is described, the Periodic Group IVb metallocene employed is a bis(cyclopentadienyl) transition element particularly zirconium, and copolymerization with alpha-omega dienes is taught. In Example 4 of that patent, bis(cyclopentadienyl) zirconium dichloride and aluminoxane are used to give atactic polypropylene of molecular weight 5000.

Typically, a high ratio of methylaluminoxane(MAO) cocatalyst to metallocene must be used (approximately 300/1 or more). But see U. S. Patent 4,808,561 wherein the reaction product of a mixture of metallocene and aluminoxane in the presence of a support is said to produce a catalyst which will polymerize olefins at an acceptable rate without the presence of an objectional excess of aluminum. Also, see U.S Patent No. 4,752,597 which describes the use of a solid reaction product of a transition metal metallocene, particularly a Group IVb metallocene, with aluminoxane cocatalyst to effectively polymerize olefin wherein the molar ratio of metallocene to aluminoxane lies between 1:12 and 1:100. It has also been reported in U.S. Patent No. 5,001,244 that the addition of a boron compound such as tris(perfluorophenyl) boron is able to reduce or eliminate the need for such a high aluminum to metallocene ratio.

In U.S. Patent No. 5,162,466, use of a cyclo(pentadienyl) dicarbollide complexes of titanium, zirconium and hafnium as catalyst in the absence of a cocatalyst, such as an aluminoxane, is taught for polymerization of ethylene or copolymerization of ethylene with a C₃ to C₈ alpha olefin.

Stanford Research Institute reports that the use of one of these metallocene Ziegler catalysts to make polyethylene is being commercialized and the process is described as capable of preparing linear low density polyethylenes of superior physical properties.

It is reported by W. Kaminsky et al. in Bull. Soc. Chim. Belg. 99 (2),103-111(1990) that simple zirconium metallocenes polymerize propylene to atactic polymer. The reference also shows that chiral, ethylene-bridged bis(tetrahydroindenyl)zirconium dichloride and methylaluminoxane catalyst can produce isotactic polypropylene. See also *Polymerization of Propene and Butene with a Chiral Zirconocene and Methylalumoxane as Cocatalyst* by W. Kaminsky et al. in Angew. Chem. Int. Ed. Engl. 24 No. 6, pp 507-508 (1985). Reisconi et al. in J. Am. Chem. Soc. 114 1025-1032(1992) states that polymerization of propylene with a bis(indenyl)zirconium dichloride (Ind₂ZrCl₂) and MAO catalyst leads to termination by beta hydrogen elimination and thus a polypropylene product which has some terminal unsaturation of the vinylidine type. In WO 9111488 to Exxon, a copolymeric wax crystal modifier of number average molecular weight between 300 and 15,000 made from ethylene and at least one alpha-olefin and containing at least 40 mol % ethylene is made using a metallocene catalyst. The copolymer has at least 30 % of the polymer chains exhibiting terminal ethenylidine unsaturation.

In U.S. Patent No. 4,658,078 use of (a) cyclo(pentadienyl) zirconium or hafnium metallocene and (b) an aluminoxane catalyst, with atom ratio of A1 to Zr or Hf of 1 to 100, is taught for dimerizing a C₃ to C₃₂ alpha olefin at temperatures between -60°C and 280°C.

In U.S. Patent No. 4,704,491 copolymerizing ethylene and a C₃ to C₂₀ alpha-olefin in the presence of a compound of Periodic Group IVb and an aluminoxane catalyst is taught for making a random copolymer.

In U.S. Patent No. 5,017,665, use of a supported, bridged bis(indenyl)zirconium dichloride/aluminoxane catalyst is taught for the copolymerization of a mixture of ethylene and 1,4-diene.

In U.S. Patent No. 5,077,255, copolymerizing ethylene and a C₃ to C₂₀ alpha-olefin in the presence of a compound of Periodic Group IVb and an aluminoxane catalyst is taught for making a random copolymer having a number average molecular weight above 20,000 and an average of at least 30% of the polymer chains contain terminal ethylidene unsaturation.

In U.S. Patent No. 5,151,204, use of a supported reaction product of (a) at least one metallocene of a metal of Group IVb, Vb, and VIb, (b) a non-metallocene transition metal containing compound of a Group IVb, Vb, and VIb metal and (c) an aluminoxane catalyst is taught for the copolymerization of a mixture of ethylene and other mono and diolefins.

In Japanese Patent No. 01,132,605 it is reported that a poly(1-olefin) made with bis(cyclopentadienyl) zirconium dichloride and methylaluminoxane can be reacted with perbenzoic acid to form epoxide.

In European Patent Application No. 0 268 214, it is reported that propylene oligomers were made with an alkyl substituted cyclopentadienyl compound of zirconium and/or hafnium and a condensation product of organoaluminum compound and water. In Comparative Examples 1, 2, and 3, however, using three non-substituted cyclopentadienyl compounds, i.e., bis(cyclopentadienyl) zirconium, hafnium, and titanium dichloride, a polymerization of propylene reaction took place preferentially to propylene oliogomerization reaction and products were all high polymers which predominantly had vinylidene group as terminal unsaturated group.

Terminal unsaturation of the vinylidine type can be very important to polymer reactivity in the case of low molecular weight, viscous polybutenes when being functionalized and a number of ways to enhance it have been suggested. For example, use of a BF₃ catalyst can substantially reduce the amount of tri- and tetra-substituted terminal olefin in the polymerization and produce more vinylidine type of termination. Terminal unsaturation of the proper type could also be very helpful to the reactivity of poly(1- olefins).

Now it has been found that a low molecular weight, viscous essentially-1-olefin-containing poly(1-olefin) or copoly(1-olefin) can be formed from a feed stock containing one or more C₃ to C₂₀ 1-olefin and other volatile hydrocarbons by selectively polymerizing the 1-olefins with a Ziegler type metallocene and aluminumoxane catalyst. Furthermore, viscous poly(1-olefins) and copoly(1-olefins) so formed are almost completely terminally unsaturated and their terminal unsaturation is, advantageously, largely of the vinylidine type. Such viscous polymers are very reactive because of the presence of the high degree of unsaturation and the extensive vinylidine termination and therefore can be easily functionalized in high yields by conventional methods to make a range of useful products. Products and process are described here in which the

EP-A-0200351 describes a liquid ethylene-type random copolymer, a process for its production and use thereof. The liquid ethylene-type random copolymer has an ethylene unit content of from 10 to 85 mole percent.

EP-A-0487278 is a citation under Article 54(3)EPC and describes syndiotactic polymers having molecular weights of the order of 20,000+.

EP-A-0522375 is a citation under Article 54(3)EPC and describes a process to break down rubber into smaller molecules, the resultant small polymer molecules being of isobutylene.

EP-A-0490454 describes an atactic propylene oligomer made using a catalyst with a molar ratio of methylaluminoxane: bis(cyclopentadienyl) zirconium dichloride of 1500:1. A similar process described in US-A-4814540 uses a ratio of 600:1 with bis(cyclopentadienyl) containing catalysts.

US-A-4542199 describes preparing polyolefins using catalysts having a methylaluminoxane: bis (cyclopentadienyl) zirconium chloride ratio of 3000:1. terminal olefinic linkage, for example, has been used to alkylate an aromatic ring, or has undergone an Ene reaction, an addition, a hydroformylation, a hydrosilylation and a chlorination. The lack of polymerisation activity of these catalysts towards olefins other than 1-olefins allows a common refinery streams containing a mixture of olefins including isobutylene to be effectively polymerized to make polyisobutene by the usual acid catalyzed process as well as produce the low molecular weight, viscous poly(1-olefin) or copoly(1-olefin) of this invention. This multistep procedure involves a different catalyst for each polymerization and utilized more fully the components of the refinery stream which after polyisobutylene formation is customarily used for fuel.

Accordingly, the invention provides a process to form an essentially terminally-unsaturated, viscous, essentially-1-olefin-containing poly(1-olefin) or copoly(1-olefin) of number average molecular weight between 300 and 10,000 that exhibits a terminal vinylidine content of more than 80%, which comprises polymerizing a feed comprising one or more C₃ to C₂₀ 1-olefin using a catalyst comprising a Periodic Group IVb metallocene and an aluminoxane cocatalyst wherein the molar ratio of aluminoxane to metallocene is 150 or greater, said feed containing at least 1 wt.% isobutylene.

In another aspect, the invention provides a process to form an essentially terminally-unsaturated, viscous, essentially-1-olefin-containing poly(1-olefin) or copoly(1-olefin) which process comprises polymerizing under fluid phase conditions a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV) or hafnium(IV) metallocene and an aluminoxane cocatalyst wherein the molar ratio of aluminoxane to metallocene is 150 or greater, to form a poly(1-olefin) or copoly(1-olefin) having number average molecular weight in a range from 300 to 10,000 and terminal vinylidine content of more than 80%.

In practice of this invention catalyst systems using a bis(cyclopentadienyl) or bis(indenyl), titanium(IV), zirconium(IV) or hafnium(IV) compound are particularly useful, preferably, bis(cyclopentadienyl) zirconium dichloride and bis(indenyl)zirconium dichloride. Advantageously, the cocatalyst is a linear methylaluminoxane and/or cyclic methylaluminoxane.

In one embodiment of the process of this invention the feed stock contains at least 0.1 wt.% of isobutylene, the catalyst system comprises bis(indenyl)zirconium dichloride and methylaluminoxane cocatalyst, and wherein a poly(1-olefin) or copoly(1-olefin) having a number average molecular weight is a range from 300 to 5000, terminal vinylidine content is greater than 90% is formed.

In a further embodiment of the process of this invention the feed stock additionally contains up to 70% by weight of an alpha-omega diene.

In another aspect, the invention is an essentially terminally-unsaturated, viscous, essentially-1-olefin-containing poly(1-olefin) or copoly(1-olefin) polymer having a number average molecular weight in a range from 300 to 10,000 and terminal vinylidine content of more than 80%, which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst.

In preferred embodiments the polymers of this invention are formed by a catalyst system using bis(cyclopentadienyl)zirconium dichloride and/or bis(indenyl)zirconium dichloride and a linear methylaluminoxane and/or cyclic methylaluminoxane cocatalyst.

In a further aspect, the invention is process to sequentially form polyisobutylene and an essentially terminally-unsaturated, viscous, essentially-1-olefin-containing poly(1-olefin) or copoly(1-olefin) of molecular weight between 300 and 10,000 that exhibits a terminal vinylidine content of more than 80% from a feed stock comprising more than 1 weight percent of at least one volatile hydrocarbon liquid that is an olefin other than a 1-olefin and less than 99 weight percent based on total feed stock of one or more C3 to C₂₀ 1-olefin, the feed containing between 0.1 and 55 wt.% isobutylene which process comprises the steps:
(a) polymerizing the 1-olefin using a catalyst system comprising a titanium(IV), zirconium(IV) or hafnium(IV) metallocene and aluminoxane cocatalyst to form poly(1-olefin) or copoly(1-olefin); and
(b) polymerizing the isobutylene with an acid catalyst to form polyisobutylene.

In another aspect, the invention is a product formed by reaction of phenol or substituted phenol with essentially terminally-unsaturated, viscous, essentially-1-olefin-containing poly( 1-olefin) or copoly(1-olefin) a number average having molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form a largely para-alkylated product of reaction. Preferred products of this reaction are formed using a catalyst system of bis(cyclopentadienyl) zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In another aspect, the invention is a product formed by reaction of hydrogen peroxide or a peracid with essentially terminally-unsaturated, viscous, essentially-1-olefin-containing poly( 1-olefin) or copoly(1-olefin) having a number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising bis(indenyl)zirconium(IV) dichloride and an aluminoxane cocatalyst to form the corresponding epoxide product of reaction. Preferred products of this reaction are formed using a catalyst system of bis(cyclopentadienyl)zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In yet another aspect, the invention is a product formed by reaction of a silylating agent containing at least one silicon-hydrogen bond with essentially terminally-unsaturated, viscous, essentially-1-olefin-containing poly( (1-olefin) or copoly(1-olefin) having a number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form the corresponding terminally silylated poly(1-olefin) or copoly(1-olefin) product of reaction. Preferred products of this reaction are formed using a catalyst system of bis(cyclopentadienyl) zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In a further aspect, the invention is a product formed by reaction of maleic anhyride with essentially terminally-unsaturated, viscous, essentially-1-olefin-containing poly(1-olefin) or copoly(1-olefin) having a number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin that is not a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form the corresponding succinic anhydride product of reaction. Preferred products of this reaction are formed using a catalyst system of bis(cyclopentadienyl)zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In still a further aspect, the invention is a product formed by reaction of carbon monoxide and hydrogen with essentially terminally-unsaturated, viscous, essentially-1-olefin-containing poly(1-olefin) or copoly(1-olefin) having a number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin that is not a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form the corresponding alcohol product of reaction. Preferred products of this reaction are formed using a catalyst system of bis(cyclopentadienyl)zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In a further aspect, the invention is a product formed by reaction of hydrogen with essentially terminally-unsaturated, viscous, essentially-1-olefin-containing poly(1-olefin) or copoly(1-olefin) having a number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin that is not a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form a largely saturated product of reaction. Preferred products of this reaction are formed using a catalyst system of bis(cyclopentadienyl)zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In another aspect, the invention is a product formed by reaction of aliphatic diamine with chlorinated polymer formed by reaction of chlorine with essentially terminally-unsaturated, viscous, essentially-1-olefin-containing poly( 1-olefin) or copoly(1-olefin) having a number average molecular weight in a range from 300 to 10,000 and terminal vinylidine content of more than 80% which poly( 1-olefin) or copoly(1-olefin) is made from a feed stock comprising more than 1 weight percent of at least one volatile hydrocarbon liquid that is an olefin that is not a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst to form an aminated product of reaction. Preferred products of this reaction are formed using a catalyst system of bis(cyclopentadienyl) zirconium dichloride and/or bis(indenyl)zirconium dichloride, and a linear methylaluminoxane and/or cyclic methylaluminoxane cocatalyst. Preferred products of this reaction are also formed using feed stock containing isobutylene in an amount of from 0.1 weight percent to 55 weight percent isobutylene based on total weight of feed stock.

In a further aspect, the invention is an essentially terminally-unsaturated, viscous, essentially-1-olefin-containing poly(1-olefin) or copoly(1-olefin) of a number average molecular weight between 300 and 10,000 that exhibits a terminal vinylidine content of more than 80% which is made from a feed comprising one or more C₃ to C₂₀ 1-olefin using a catalyst comprising a Periodic Group IVb metallocene and an aluminoxane cocatalyst, said feed containing at least about 1 wt. % isobutylene. In still a further aspect, the invention is a process to form an essentially terminally-unsaturated, viscous, essentially-1-olefin-containing poly(1-olefin) or copoly(1-olefin) of a number average molecular weight between 300 and 10,000 that exhibits a terminal vinylidine content of more than 80% comprising polymerizing a feed containing one or more olefin selected from the group consisting of C₃ to C₂₀ 1-olefins with a catalyst comprising a bis(indenyl)titanium(IV), zirconium(IV) or hafnium(IV) compound and an aluminoxane cocatalyst. In yet another aspect, the invention is the reaction of a phenol or substituted phenol, an epoxidation agent, a silylating agent having at least one silicon-hydrogen bond, maleic anhydride, or carbon monoxide and hydrogen (hydroformylation) with an essentially terminally-unsaturated, viscous, essentially-1-olefin-containing poly(1-olefin) or copoly(1-olefin) of a number average molecular weight between 300 and 10,000 that exhibits a terminal vinylidine content of more than 80% which is made from a feed comprising one or more C₃ to C₂₀ 1-olefin using a catalyst comprising a titanium(IV), zirconium(IV) or hafnium(IV) metallocene and an aluminoxane cocatalyst to form the corresponding largely para-alkylated phenol or substituted phenol, epoxide, a terminally silylated poly(1-olefin) or copoly(1-olefin), succinic anhydride, alcohol, or saturated hydrocarbon. And in still another aspect, the invention is a process to sequentially form polyisobutylene and an essentially terminally-unsaturated, viscous, essentially-1-olefin-containing poly( 1-olefin) or copoly(1-olefin) of a number average molecular weight between 300 and 10,000 that exhibits a terminal vinylidine content of more than 80% from a feed comprising one or more C₃ to C₂₀ 1-olefins, said feed contains between 0.1 and 55 wt% isobutylene which comprises:
polymerizing said feed using a catalyst comprising a titanium (IV), zirconium (IV) or hafnium (IV) metallocene and an aluminoxane cocatalyst to form said poly (1-olefin) or copoly(1-olefin); and
polymerizing said isobutylene with an acid catalyst to form said polyisobutylene.
Still further aspects of the invention are viscous, essentially terminally-unsaturated, essentially 1-olefin-containing copoly(1-olefin)s formed (1) from two or more C₃-C₂₀ 1-olefins together with one or more non-1-olefins and having a number average molecular weight of 300 to 10,000 and a terminal vinylidene content of more than 80%, and (2) from at least one C₃-C₂₀ 1-olefin and an alpha-omega diene and having a molecular weight of 300 to 10,000 and a terminal vinylidene content of more than 80%, and obtainable by a process according to the invention.

### Detailed Description Of The Invention

The Ziegler catalysts which are suitable for this invention are composed importantly of two components. One component is a Periodic Group IVb metallocene, preferably a titanium(IV), zirconium(IV) or hafnium(IV) metallocene and the other is an aluminoxane. The organic moiety of the metallocene is preferably cyclopentadienyl, indenyl or a lower alkyl derivative thereof such as a lower-alkyl-substituted cyclopentadienyl or indenyl. Examples are bis(pentamethylcyclopentadienyl) or an ethylene-bridged bis indenyl compound(at least with monomers that it does not give isotactic polymers with). The zirconium(IV) metallocenes are more preferred, as they give molecular weights in the 1000 to 2000 number average range in the convenient 30 to 80°C range, and bis(indenyl)zirconium dichloride is the most preferred metallocene.

The aluminoxanes are made generally by careful hydrolysis of a trialkylaluminum, more preferably trimethylaluminum which makes methylaluminoxane, and may be the linear or cyclic variety of aluminoxane or a mixture of both. This type of Ziegler catalyst unlike the widely used titanium trichloride/aluminum alkyl catalyst for propylene polymerization is generally soluble in aromatic solvents such as benzene, toluene as may be understood by one skilled in the art. The molar amount of aluminoxane used in the catalyst is generally considerably greater than that of the metallocene used. Generally, molar ratios of 150 to 300(aluminoxane to metallocene) or more are used, although methods have been devised to reduce the amount of aluminoxane as maybe understood by one skilled in the art. For example, the catalyst may contain a boron compound such as tris(perfluorophenyl) boron which can be effective in reducing or eliminating the amount of aluminoxane needed.

Generally, the metallocene and aluminoxane are individually combined with the olefin to be polymerized, and the order of combination does not appear critically important. It is not necessary to combine the metallocene and aluminoxane first and isolate a solid which is then used as the catalyst by addition to the polymerization mix.

Feed stocks which are suitable for this invention are composed importantly of two components. One component is a one or more C₃ to C₂₀ 1-olefins, preferably C₃ to C₁₀ 1-olefins, more preferably one or more 1-olefins selected from the group consisting of propene, 1-butene, 1-pentene, and 1-hexene, and most preferably 1-butene, 1-pentene, and/or 1-hexene. The other essential component of such feed stocks is another hydrocarbon (non-1-olefin), preferably one or more volatile hydrocarbon liquid. Furthermore, feed stocks which are suitable for this invention are substantially free of nitrogen, sulfur, and oxygen containing compounds and like compounds which can deactivate the catalyst systems of this invention.

Advantageously, the volatile hydrocarbon liquid components of the feed stock are in the liquid phase at conditions of polymerization, but have sufficient volatility, relatively low normal boiling temperatures, such that these volatile hydrocarbon liquid can be separated from the essentially terminally-unsaturated, viscous, essentially-1-olefin-containing poly( 1-olefin) or copoly(1-olefin) products having a number average molecular weight in a range from 300 to 10,000, by a reduction of pressure at temperatures below 250°C.

The olefin feed to make the low molecular weight, viscous polymers of this invention contains one or more C₃ to C₂₀ 1-olefin. A particularly preferred feed is a refinery stream sometimes referred to as a butane-butylene stream(BB stream) which contains substantial amounts of C₄ hydrocarbons such as isobutylene, 1-butene, 2-butene and butane together with propene, propane and small amounts of higher hydrocarbons. Such streams are used in the manufacture of poly(isobutylene). Other preferred feeds are a BB stream after the isobutylene content has been largely or completely polymerized by an acid catalyst such as aluminum chloride or boron trifluoride which is generally rich in propylene and 1-butene(lean BB), and raffinates I and II which are feeds derived from steam cracking units typically containing between 55 and 0.1 wt.% isobutylene. Propene and 1-butene and their mixtures are also preferred feeds to the process of this invention.

When the olefin feed contains isobutylene, it is present in an amount between 0.1 wt.% and 55 wt.%, more preferably between 1 wt.% and 55 wt.%, and most preferably between 5 wt.% and 55 wt.%.

Feed stocks which are suitable for this invention include a butane-butene feed stock having an approximate composition of 8% propane, 9% propene, 39 % isobutane, 14% 1-butene, 12% n-butane, 2% isobutylene 15% cis and trans 2-butenes, 0.5% butadiene and small amounts (less than 1%) of other hydrocarbons). Other butane-butene feed stocks suitable for this invention include feed stocks having an approximate composition 4 % isobutane, 28% 1-butene, 10% n-butane, 42% isobutylene, 16 % cis and trans 2-butenes, and small amounts (less than 1%) of other hydrocarbons) and a butane-butene feed stock having an approximate composition 8 % isobutane, 46% 1-butene, 17% n-butane, 27 % cis and trans 2-butenes, and small amount (less than 1%) of other hydrocarbons). Other feed stocks which are suitable for this invention include pentane-pentene feed stocks varying in the relative amount of 1-pentene from 5% 1-pentene and 95% pentane to 50% 1-pentene and 50% pentane.

Copolymers made from one or more 1-olefin and a diene may be made. Preferably a diene with one double bond substituted by a R group (to suppress any cross linking by the added olefinic linkage) such as isoprene, 7-methyl-1,6-octadiene, 4-vinylcyclohexene, and the like may be used in the inventive process. The addition of up to 70 wt.%, more preferably up to 50 wt.% to the polymerization feed of such diene, more preferably an alpha-omega diene, allows non-terminal unsaturation to be included in the inventive polymers which can provide for cross linking and alteration of the polymer properties.

The terminally unsaturated, viscous polymer of this invention is essentially a poly( 1-olefin) or copoly(1-olefin). By essentially is meant more than a 95% and, more preferably, more than a 98% 1-olefin content in the polymer chains except where, for example, an alpha-omega diene is added as described above. The catalyst of the invention appears to not substantially cause the polymerization of olefinic monomers other than 1-olefins. The product polymers also preferably have a number average molecular weight (Mₙ) between 300 and 10,000, more preferably between 300 and 5000, and most preferably 400 and 3000 when measured by gel permeation chromatography. The polymer chains of the viscous polymers of this invention are essentially terminally-unsaturated. By essentially terminally-unsaturated is meant preferably more than 90% of the polymer chains contain unsaturation, more preferably more than 95%, and most preferably more than 99% of the polymer chains in the product polymer contain terminal unsaturation. The terminal unsaturation is preferably more than 80%, more preferably more than 90%, and, most preferably, more than 95% of the vinylidine type.

The high degree of vinylidine type unsaturation makes the viscous polymers of this invention very reactive in the typical functionalization reactions which olefinic linkages undergo such as addition, hydroformylation, hydrosilylation, Ene reactions such as a Diels Alder, alkylation.

The temperature of polymerization is determined in part by the molecular weight of the polymer to be made. As may be understood by one skilled in the art, the molecular weight is in part determined by the temperature. However, the composition of the catalyst is also able to influence the molecular weight. Higher temperatures generally lead to lower molecular weights. A temperature in the range of -80° C to 150° C may be used depending upon the use to which the polymer product is to be put. More preferably, the polymerization temperature is ambient to 100°C, most preferably between 50 and 100°C for convenience of the polymerization operation.

The inventive catalysts made from metallocene and aluminoxane cocatalyst can be used unsupported or supported by compositing them with a typical inorganic oxide support material used for this type of Ziegler catalyst as can be understood by one skilled in the art. The polymerization process utilizing the catalysts may be a suspension, solution or gas phase polymerization.

By viscous is meant polymers which undergo cold flow at molecular weights in the above set forth ranges at ambient temperature.

One of the more useful functionalization reactions on the polymers of this invention is the use of the viscous, terminally unsaturated poly(1-olefins) to alkylate an aromatic compound such as phenol or a substituted phenol. Viscous poly(1-propene) or poly(1-butene) made by a process of this invention when used to alkylate phenol gives preferentially the para-substituted alkylation product which has some special advantages as viscosity improves, and the like. The alkylated phenol product when reacted with materials such as formaldehyde and tetraethylenepentamine forms a useful lubricating oil dispersant such as the Mannich additive.

Another very useful functionalization reaction of the terminal vinylidine bond of the polymers of this invention is the reaction of a poly( 1-olefin) with maleic anhydride (an Ene reaction) which terminates the polymer with a succinic anhydride. Such materials are useful for petroleum additives, paper sizing agents, adhesives.

Other useful functionalization reactions of the terminal vinylidine bond that produce compounds of great utility are hydroformylation with carbon monoxide and hydrogen, hydrosilylation with a silane such as a alkoxysilane or alkoxychlorosilane, epoxidation with hydrogen peroxide or a peracid, halogenation with chlorine or bromine, hydrohalogenation, hydrogenation sulfonation with sulfonic acid. The formation of these products generally proceed in the manner in which simple 1-olefins do may be understood by one skilled in the art.

The low molecular weight, viscous, essentially terminally-unsaturated, essentially 1-olefin polymers and copolymers of this invention may be used for lubricating oils, gasoline additives, sealants, caulks, adhesives, cosmetics, oil field chemicals. They have distinct advantages over viscous polybutenes for one or more of these applications as they:
have higher reactivity due to the steric character of the terminal olefinic link;
have different viscosity/molecular weight relationships than current viscous polyolefins;
can have higher reactivity than current viscous polyolefins after being derivatized due to the steric character of the terminal olefin; and.
have potentially higher number average molecular weights which are larger than current viscous polyolefins.

The functionalized products made using a phenol or substituted phenol, maleic anhydride, an epoxidizing agent, a hydrosilylating agent or carbon monoxide and hydrogen, and of the low molecular weight, viscous, essentially-terminally unsaturated, essentially 1-olefin polymers and copolymers of this invention are also useful for lubricating oils, gasoline additives, sealants, caulks, adhesives, cosmetics, and the like.

Low molecular weight, viscous, essentially-terminally unsaturated, essentially 1-olefin polymers and copolymers of this invention may be chlorinated with any of a variety of reagents including elemental chlorine and the chlorinated product then reacted with any of a variety of amines, e.g. ethylene diamine, to obtain aminated product useful in fuel and motor oil compositions. See, for example, U.S. Patent Nos. 3,960,515; 4,832,702; 4,234,235; and WO 92/14806.

The following Examples will serve to illustrate certain specific embodiments of the herein disclosed invention. These Examples should not, however, be construed as limiting the scope of the novel invention contained herein as there are many variations which may be made thereon without departing from the spirit of the disclosed invention, as those of skill in the art will recognize.

### EXAMPLES

All manipulations with the metallocene and aluminoxane cocatalyst were carried out in a glove box under nitrogen, and high vacuum techniques were used where appropriate. Determination of the degree of unsaturation of a poly(1-olefin) was measured either by epoxidation of 1-olefin with m-chloroperbenzoic acid and titration of benzoic acid produced, or reaction of 1-olefin with bromine and measurement of unreacted bromine. Determination of the amount of terminal vinylidine in a polymer sample was carried out using ¹³C and ¹H NMR by integration of the peak areas in olefinic regions. Molecular weights were determined using gel permeation chromatography(GPC).

### Example 1

A butane-butene feed stock having an approximate composition of 8% propane, 9% propene, 39 % isobutane, 14% 1-butene, 12% n-butane, 2% isobutylene 15% cis and trans 2-butenes, 0.5% butadiene and small amounts (less than 1%) of other hydrocarbons) was polymerized using Ind₂ZrCl₂ and methylaluminoxane as the catalyst system. A reaction vessel was sequentially charged with 6.7 mg of Ind₂ZrCl₂, 25 mL of toluene and 2.0 mL of a solution of MAO in toluene (d=0.860 g/mL, 5.9 wt.% Al, Al/Zr of about 220). The mixture was stirred for about 5 minutes followed by addition of 93 g of the above feed. The reaction mixture was stirred at 40°C for 20 hr, quenched with isopropanol, extracted into pentane, washed with 2N NaOH and water and dried over MgSO₄. Removal of volatile liquids under reduced pressure resulted in recovery of 10.8 g (61% yield based on the propene and 1-butene content) of a clear, viscous material. ¹³C NMR showed major peaks at 109.9-110.1, 112.3-112.5, 145.0-145.3 and 150.5-150.8 ppm. The presence of four peaks indicated chain termination with both propene and butene. A ¹H multiplet in the range of 4.6 to 4.8 ppm was also found, and a terminal vinylidine content of greater than 80% was calculated for the product. Using similar feed stocks and the Ind₂ZrCl₂ and methylaluminoxane catalyst system, polymers with Mₙ in a range from about 500 to about 5000 are obtained under controlled temperatures of polymerization in a temperature range of from about -10°C to about 100°C. Using Cp₂ZrCl₂ and methylaluminoxane catalyst system, polymers with Mₙ in a range from about 300 to about 2000 are obtained under controlled temperatures of polymerization in a temperature range of from about -10°C to about 100°C.

### Example 2

Example 1 is repeated using a butane-butene feed stock having an approximate composition 4% propane, 6% propene, 31 % isobutane, 14% 1-butene, 12% n-butane, 17% isobutylene, 16 % cis and trans 2-butenes, 0.5% butadiene and small (less than 1%) of other hydrocarbons). A clear, viscous material is recovered having a terminal vinylidine content of greater than 80%. Using similar feed stocks and the Ind₂ZrCl₂ and methylaluminoxane catalyst system, polymers with Mₙ in a range from about 500 to about 5000 are obtained under controlled temperatures of polymerization in a temperature range of from about -10°C to about 100°C. Using Cp₂ZrCl₂ and aluminoxane catalyst system, polymers with Mₙ in a range from about 300 to about 2000 are obtained under controlled temperatures of polymerization in a temperature range of from about -10°C to about 100°C.

### Example 3

Example 1 is repeated using a butane-butene feed stock having an approximate composition 4 % isobutane, 28% 1-butene, 10% n-butane, 42% isobutylene, 16 % cis and trans 2-butenes, and small amounts (less than 1%) of other hydrocarbons). 137 g of this feed stock was polymerized at 40°C with a Ind₂ZrCl₂ and methylaluminoxane catalyst system. A clear, viscous material, 22 g with Mₙ of 674, was recovered . ¹³C NMR showed the four peaks indicated chain termination with both propene and butene. A ¹H multiplet in the range of 4.6 to 4.8 ppm was also found, and a terminal vinylidine content of greater than 80% was calculated for the product. Using similar feed stocks and the Ind₂ZrCl₂ and methylaluminoxane catalyst system, polymers with Mₙ in a range from about 500 to about 5000 are obtained under controlled temperatures of polymerization in a temperature range of from about -10°C to about 100°C. Using Cp₂ZrCl₂ and aluminoxane catalyst system, polymers with Mₙ in a range from about 300 to about 2000 are obtained under controlled temperatures of polymerization in a temperature range of from about -10°C to about 100°C.

### Example 4

Example 1 is repeated using a butane-butene feed stock having an approximate composition 8 % isobutane, 46% 1-butene, 17% n-butane, 27 % cis and trans 2-butenes, and small amount (less than 1%) of other hydrocarbons). A clear, viscous material is recovered having a terminal vinylidine content of greater than 80%. Using similar feed stocks and the Ind₂ZrCl₂ and methylaluminoxane catalyst system, polymers with Mₙ in a range from about 500 to about 5000 are obtained under controlled temperatures of polymerization in a temperature range of from about -10°C to about 100°C. Using Cp₂ZrCl₂ and aluminoxane catalyst system, polymers with Mₙ in a range from about 300 to about 2000 are obtained under controlled temperatures of polymerization in a temperature range of from about -10°C to about 100°C.

### Example 5

In this example propane-propene feed stocks varying in the relative amount of propane from 0% propane and 100% propene to 70% propane and 30% propene are polymerized in a series of runs. In each run a reaction vessel is sequentially charged with 6.7 mg of Ind₂ZrCl₂, 25 mL of toluene and 2.0 mL of a solution of MAO in toluene (d=0.860 g/mL, 5.9 wt.% Al, Al/Zr of about 220). This mixture is stirred for about 5 minutes followed by addition of feed stock at a constant pressure of 40 psig. The reaction mixture is stirred at 23°C for 20 hr, quenched with isopropanol, extracted into pentane, washed with 2N NaOH and water and dried over MgSO₄. A clear, viscous material is recovered having a terminal vinylidine content of greater than 80%. Using similar feed stocks and the Ind₂ZrCl₂ and methylaluminoxane catalyst system, polymers with Mₙ in a range from about 500 to about 5000 are obtained under controlled temperatures of polymerization in a temperature range of from about -10°C to about 100°C. Using Cp₂ZrCl₂ and aluminoxane catalyst system, polymers with Mₙ in a range from about 300 to about 2000 are obtained under controlled temperatures of polymerization in a temperature range of from about-10°C to about 100°C..

### Example 6

In this example pentane-pentene feed stocks varying in the relative amount of 1-pentene from 5% 1-pentene and 95% pentane to 50% 1-pentene and 50% pentane are polymerized in a series of runs. In each run a reaction vessel is sequentially charged with 6.7 mg of Ind₂ZrCl₂, 25 mL of toluene and 2.0 mL of a solution of MAO in toluene (d=0.860 g/mL, 5.9 wt.% Al, Al/Zr of about 220). This mixture is stirred for about 5 minutes followed by addition of feed stock at a constant pressure. The reaction mixture is stirred at 23°C for 20 hr, quenched with isopropanol, extracted into pentane, washed with 2N NaOH and water and dried over MgSO₄. Removal of volatile liquid under reduced pressure results in recovery of a clear, viscous material. ¹³C NMR shows major peaks at 112.3-112.5 and 145.0-145.3 ppm, a ¹H multiplet in the range of 4.6 to 4.8 ppm, and a terminal vinylidine content of greater than 80%. The roduct has a Mₙ in a range from about 500 to about 5000 are obtained at controlled temperatures of polymerization temperature in a range from about -10°C to about 100°C. Using similar feed stocks Cp₂ZrCl₂ and aluminoxane catalyst system, polymers with Mₙ in a range from about 300 to about 2000 are obtained under controlled temperatures of polymerization in a temperature range of from about-10°C to about 100°C.

### Example 7

A 20 mL to 10 mL ratio of 1-hexene and 7-methyl-1,6-octadiene ratio was polymerized in toluene at 50°C using 4.5 mg of Ind₂ZrCl₂ and an aluminoxane to metallocene ratio of 330 to give a clear, free flowing viscous polymer which exhibits a Mn of 1170 and a DI(dispersivity index) of 1.51 using GPC. ¹³C NMR analysis shows two types of olefinic linkages, terminal vinylidine and side chain. Analysis shows that about one molecule of diene per two hexene molecules has been incorporated in the chain.

### Preparative Example 1

A reaction vessel was sequentially charged with 6.7 mg of Ind₂ZrCl₂, 25 mL of toluene and 2.0 mL of a solution of MAO in toluene (d=0.860 g/mL, 5.9 wt.% Al, Al/Zr of about 220). This mixture was stirred for about 5 minutes followed by addition of propylene at a constant pressure of 40 psig. The reaction mixture was stirred at 23°C for 20 hr, quenched with isopropanol, extracted into pentane, washed with 2N NaOH and water and dried over MgSO₄. Removal of volatile liquid under reduced pressure resulted in recovery of 135 g of a clear, viscous material. ¹³C NMR showed major peaks at 112.3-112.5 and 145.0-145.3 ppm, a ¹H multiplet in the range of 4.6 to 4.8 ppm, and a terminal vinylidine content of greater than 90% was calculated. This product, identified as poly(1-propylene) PEx-1, had a Mₙ of 2325 and a M_{w}/Mₙ of 1.73.

### Preparative Example 2

The polymerization of Example 1 was repeated, except the temperature of polymerization was 53°C. A polymer, identified as poly(1-propylene) PEx-2, with Mn of 987 and a M_{w}/Mₙ of 1.70 was recovered.

### Preparative Example 3

A reaction vessel was sequentially charged with 8.1 mg of Cp₂ZrCl₂, 50 mL of toluene and 2.2 mL of a solution of MAO in toluene (d=0.860 g/mL, 5.9 wt.% Al, Al/Zr of about 150). The mixture was stirred for about 5 minutes followed by addition of propylene at 40 psig for 1 hr. The reaction mixture was stirred at 50°C for 1 hr, quenched with isopropanol, extracted into pentane, washed with 2N NaOH and water and dried over MgSO₄. Removal of the liquid under reduced pressure resulted in recovery of 15.0 g of a clear, viscous material. ¹³C NMR showed major peaks at 112.3-112.5 and 145.0-145.3 ppm a ¹H multiplet at 4.6-4.8 ppm and the polymer exhibits a terminal vinylidine content of 90%. This product, identified as poly(1-propylene) PEx-3, has a Mₙ of 477 and a M_{w}/Mₙ of 2.18.

### Preparative Example 4

A reaction vessel was sequentially charged with 6.7 mg of Ind₂ZrCl₂, 25 mL of toluene and 2.0 mL of a solution of MAO in toluene (d=0.868 g/mL, 5.9 wt.% Al, Al/Zr of about 220). The mixture was stirred for about 5 minutes followed by addition of 200 g of 1-butene. The reaction mixture was stirred at 40°C for 20 hours, quenched with isopropanol, extracted into pentane, washed with 2N NaOH and water and dried over MgSO₄. Removal of the liquid under reduced pressure resulted in recovery of 190 g (95 % yield) of a clear, viscous material. ¹³C NMR showed major peaks at 108-112 and 149-152 ppm and a ¹H multiplet at 4.6-4.8 ppm. Analysis showed the terminal vinylidine content to be greater than 80%. This, identified as poly( 1-butene) PEx-4, product has a Mₙ of 1860 and a M_{w}/Mₙ of 1.64. It is possible to obtain polymers with an Mₙ ranging from about 500 to 5000 with the catalyst by varying the polymerization temperature from -10°C to 100°C.

### Preparative Example 5

A reaction vessel was sequentially charged with 5.0 mg of Cp₂ZrCl₂, 25 mL of toluene and 2.0 mL of a solution of MAO in toluene (d=0.860 g/mL, 5.9 wt.% Al, Al/Zr of about 220). The mixture was stirred for about 5 minutes followed by addition of 200 g of 1-butene. The reaction mixture was stirred at 40°C for 20 hr, quenched with isopropanol, extracted into pentane, washed with 2N NaOH and water and dried over MgSO₄. Removal of the liquid under reduced pressure resulted in recovery of 160 g (80 % yield) of a clear, viscous material. ¹³C NMR showed major peaks at 108-112 and 149-152 ppm and a ¹H multiplet in the range of 4.6 to 4.8 ppm. The terminal vinylidine content of the product was greater than 80%. This product, identified as poly(1-butene) PEx-5, had a Mₙ of 661 and a M_{w}/Mₙ of 1.92. It is possible to obtain polymers with an Mₙ ranging from about 300 to 2000 with the catalyst by varying the polymerization temperature from -10°C to 100°C.

### Preparative Example 6

A reaction vessel was sequentially charged with 6.7 mg of Ind₂ZrCl₂, 25 mL of toluene and 2.0 mL of a solution of MAO in toluene (d=0.860 g/mL, 5.9 wt.% Al, Al/Zr of about 220). The mixture was stirred for about 5 minutes followed by addition of 200 g of 1-hexene. The reaction mixture was stirred at 40°C for 20 hr, quenched with isopropanol, extracted into pentane, washed with 2N NaOH and water and dried over MgSO₄. Removal of the liquid under reduced pressure resulted in recovery of 190 g (95 % yield) of a clear, viscous material. ¹³C NMR showed major peaks at 108-112 and 149-152 ppm, a ¹H multiplet in the range of 4.6-4.8 ppm and a terminal vinylidine content of greater than 80%. This product, identified as poly(1-hexene) PEx-6, had a Mₙ of 2653 and a M_{w}/Mₙ of 2.19. It is possible to obtain polymers with an Mₙ ranging from about 500 to 5000 with the catalyst by varying the polymerization temperature from -10°C to 100°C.

### Preparative Example 7

A 20 mL to 10 mL ratio of 1-hexene and 7-methyl-1,6-octadiene ratio was polymerized in toluene at 50°C using 4.5 mg of Ind₂ZrCl₂ and an aluminoxane to metallocene ratio of 330 to give a clear, free flowing viscous polymer which exhibits a Mn of 1170 and a DI(dispersivity index) of 1.51 using GPC. ¹³C NMR analysis shows two types of olefinic linkages, terminal vinylidine and side chain. Analysis shows that about one molecule of diene per two hexene molecules has been incorporated in the chain.

### Preparative Example 8

In this example five selected metallocene catalysts systems were used under similar conditions. In each run a reaction vessel was sequentially charged with 5 mg of metallocene, 25 mL of toluene and 2.0 mL of a solution of MAO in toluene (d=0.860 g/mL, 5.9 wt.% Al, Al/Zr of about 220). The mixture was stirred for about 5 minutes followed by addition of 180 g of 1-butene. The reaction mixture was stirred at 40°C for 20 hr, quenched with isopropanol, extracted into pentane, washed with 2N NaOH and water and dried over MgSO₄. Removal of the liquid under reduced pressure resulted in recovery of a clear, viscous material. ¹³C NMR showed major peaks at 108-112 and 149-152 ppm, a ¹H multiplet in the range of 4.6-4.8 ppm and a terminal vinylidine content of greater than 80% for each product. The metallocenes used and Mₙ of each product obtained are listed below.

| Table of Preparative Example 8 | |
|---|---|
| Metallocene | Mₙ |
| Cp₂ZrCl₂ | 566 |
| (MeCp)₂ZrCl₂ | 600 |
| (BuCp)₂ZrCl₂ | 565 |
| (Me₅Cp)₂ZrCl₂ | 1513 |
| Ind₂ZrCl₂ | 1755 |

### Example 8

A 9 g portion of a poly( 1-propene) made in the manner of Preparative Example 2 (VPO MW 987) was placed in a Monel container along with 0.0145 g of platinum divinyltetramethyldisiloxane catalyst and 2.02 g of methyldichlorosilane. The container was sealed and heated to 80°C for 3 hr. Upon cooling the product was transferred into a round-bottom flask and the excess silane removed by vacuum stripping. The final product showed a conversion of 83.5% as determined by comparison of the residual olefin content with the starting polymer. This conversion was also confirmed by determination of the amount of silane reacted. Similar results were obtained by employing H₂PtCl₆ as the catalyst.

### Example 9

A 9 g portion of poly(1-butene) made in the manner of Preparative Example 5 (GPC Mn 760) was placed in a Monel container along with 0.013 g of platinum divinyltetramethyldisiloxane catalyst and 1.8 g of methyldichlorosilane. The container was sealed and heated to 80°C for 3 hr. Upon cooling the product was transferred into a round-bottom flask and the excess silane removed by vacuum stripping. The final product showed a conversion of 81% as determined by comparison of the residual olefin content with the starting polymer. This conversion was also confirmed by determination of the amount of silane reacted. Similar results were obtained by employing H₂PtCl₆ as the catalyst.

### Comparative Example 9

This Example was run similarly to Examples 8 and 9 except that a 10 g portion of Amoco polybutene of grade H-100, 0.0145 g of platinum divinyltetramethyldisiloxane and 2 g of methyldichlorosilane were used. The conversion was 5.3%.

### Example 10

The epoxidation of a 10 g portion poly(1-butene) made in the manner of Preparative Example 4 was carried out in 100 mL of chloroform to which was added 1.1 equivalents of m-chloroperbenzoic acid. The peracid was about 75% pure. The solution was refluxed for one hour and worked up by pouring it onto cracked ice in water and extracting the product into chloroform. The chloroform layer was subsequently extracted with a 10% sodium bicarbonate solution to remove acid. NMR analysis of the product after removal of the chloroform by rotary evaporation showed no remaining olefin and essentially 100% conversion to the epoxide.

### Example 11

To a 2 liter autoclave was charged 500 g of a poly(1-butene) made in the manner of Preparative Example 4 with a molecular weight of 1922 made in the manner of Example 2. To this was added a 28 g portion (1.1 molar excess) of maleic anhydride. The autoclave was sealed and heated to a temperature of approximately 220°C and held for a specified period of time. The autoclave was then cooled and the resulting product removed and analyzed for its conversion to the succinic anhydride derivative. Under these conditions a conversion of about 61% was obtained. Under the same reaction conditions a conventional polybutene sample of similar molecular weight gave a conversion of about 42%.

### Example 12

A 300 mL stainless steel autoclave was charged with a 30 g portion of poly-(1-butene) made in the manner of Preparative Example 5 with a Mₙ of 489, 115 mL of hexane and a 1.0 g portion of dicobalt octacarbonyl. The autoclave was sealed and purged of oxygen by pressurizing the reactor to 90 psig with a 2/1 H₂/CO gas mixture, stirring for few moments and then slowly venting the pressure. This procedure was repeated twice. The pressure was adjusted to 2500 psig and the solution heated to 180°C. After reaching reaction temperature, the pressure was readjusted to 3000 psig and the solution allowed to stir for 3 hr under these conditions. After this time, the solution was cooled to room temperature and slowly vented to atmospheric pressure. The crude dark red-brown solution was washed with refluxing 10% acetic acid until the organic layer was colorless. The layers were separated and the organic layer washed with water and dried over MgSO₄. Analysis was performed using silica gel chromatography employing first pentane and then chloroform/acetone as solvents. Conversion of poly(1-butene) to poly(1-butylalcohol) and poly(1-butylformate) was 87%.

### Example 13

The procedure employed in Example 12 was followed using poly-(1-butene) made in the manner of Preparative Example 4 with a Mn 1098. Conversion to poly-butylalcohol and poly-1-butylformate (as determined by silica gel chromatography) was

### 84%.

Example 14 A portion of a poly-(1-propene) made in the manner of Preparative Example 2 (Mn about 900) was chlorinated at 0.1 SCFH chlorine at temperatures above 100°C. The resulting polypropyl chloride contained 8.2 % chloride. This chlorinated viscous polymer was reacted with an excess of aliphatic diamine for several hours at reflux. The resulting aminated polypropene had a basic nitrogen content of 1.75 wt % which is suitable for a variety of uses including detergents and other fuel additives.

## Claims

1. A process to form an essentially terminally-unsaturated, viscous, essentially-1-olefin-containing poly(1-olefin) or copoly(1-olefin) of number average molecular weight between 300 and 10,000 that exhibits a terminal vinylidine content of more than 80%, which comprises polymerising a feed comprising one or more C₃ to C₂₀ 1-olefin using a catalyst comprising a Periodic Group IVb metallocene and an aluminoxane cocatalyst wherein the molar ratio of aluminium in the aluminoxane to Group IVb metal in the metallocene is 150 or greater, said feed containing at least 1 wt.% isobutylene.

2. The process of Claim 1 using a catalyst comprising a bis(cyclopentadienyl) or bis(indenyl), titanium (iv), zirconium (iv) or hafnium (iv) compound.

3. The process of Claim 2 using a catalyst comprising bis(cyclopentadienyl) zirconium dichloride or bis(indenyl) zirconium dichloride.

4. The process of any of Claims 1-3 using a cocatalyst selected from linear methylaluminoxane, cyclic methylaluminoxane and mixtures thereof.

5. The process of any of Claims 1-4 carried out under solution or gas phase conditions.

6. A process to form an essentially terminally-unsaturated, viscous, essentially-1-olefin-containing poly(1-olefin) or copoly(1-olefin) which process comprises polymerizing under fluid phase conditions a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater, to form a poly(1-olefin) or copoly(1-olefin) having number average molecular weight in a range from 300 to 10,000 and terminal vinylidine content of more than 80%.

7. The process of Claim 6 wherein the cocatalyst is selected from the group consisting of linear methylaluminoxane, cyclic methylaluminoxane, and mixtures thereof.

8. The process of Claim 7 wherein the catalyst system comprises a member selected from the group consisting of bis(cyclopentadienyl) or bis(indenyl) titanium(IV), zirconium(IV) and hafnium(IV) compounds.

9. The process of Claim 6 wherein the catalyst system comprises a member selected from the group consisting of bis(cyclopentadienyl)zirconium dichloride and bis(indenyl)zirconium dichloride.

10. The process of Claim 6 wherein the feed stock contains at least 0.1 wt.% of isobutylene, the catalyst system comprises bis(indenyl)zirconium dichloride and methylaluminoxane cocatalyst, and wherein a poly(1-olefin) or copoly(1-olefin) having number average molecular weight in a range from 300 to 5000 and a terminal vinylidine content greater than 90% is formed.

11. The process of Claim 6 wherein feed stock additionally contains up to 70% by weight of an alpha-omega diene.

12. A process to sequentially form polyisobutylene and an essentially terminally-unsaturated, viscous, essentially-1-olefin-containing poly(1-olefin) or copoly(1-olefin) of number average molecular weight between 300 and 10,000 that exhibits a terminal vinylidine content of more than 80% from a feed stock comprising more than 1 weight percent of at least one volatile hydrocarbon liquid that is an olefin other than a 1-olefin and less than 99 weight percent based on total feed stock of one or more C₃ to C₂₀ 1-olefin, the feed containing between 0.1 and 55 wt% isobutylene, which process comprises the steps:-
(a) polymerizing the 1-olefin using a catalyst system comprising a titanium(IV), zirconium(IV) or hafnium(IV) metallocene and aluminoxane cocatalyst wherein the molar ratio of aluminium in the aluminoxane to Group IVb metal in the metallocene is 150 or greater to form poly(1-olefin) or copoly(1-olefin); and
(b) polymerizing the isobutylene with an acid catalyst to form polyisobutylene.

13. The process of Claim 12 wherein the catalyst system comprises a bis(indenyl) zirconium(IV) compound.

14. The process of Claim 12 wherein the metallocene is bis(indenyl) zirconium dichloride.

15. A product formed by reaction of phenol or substituted phenol with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater to form a largely para-alkylated product of reaction.

16. A product formed by reaction of hydrogen peroxide or a peracid with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising bis(indenyl)zirconium(IV) dichloride and an aluminoxane cocatalyst wherein the molar ratio of aluminium in the aluminoxane to Group IVb metal in the metallocene is 150 or greater to form the corresponding epoxide product of reaction.

17. A product formed by reaction of a silylating agent containing at least one silicon-hydrogen bond with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater to form the corresponding terminally silylated poly(1-olefin) or copoly(1-olefin) product of reaction.

18. A product formed by reaction of maleic anhydride with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater to form the corresponding succinic anhydride product of reaction.

19. A product formed by reaction of carbon monoxide and hydrogen with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater to form the corresponding alcohol product of reaction.

20. A product formed by reaction of hydrogen with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of aluminium in the aluminoxane to Group IVb metal in the metallocene is 150 or greater to form a largely saturated product of reaction.

21. A product formed by reaction of aliphatic diamine with chlorinated polymer formed by reaction of chlorine with essentially terminally-unsaturated, viscous, essentially-1-olefin-containing poly(1-olefin) or copoly(1-olefin) having number average molecular weight in a range from 300 to 10,000 and terminal vinylidine content of more than 80% which poly(1-olefin) or copoly(1-olefin) is made from a feed stock comprising more than 1 weight percent of at least one volatile hydrocarbon liquid that is an olefin other than a 1-olefin and less than 99 weight percent based on total feed stock of one or more C₃ to C₂₀ 1-olefin using a catalyst system comprising a titanium(IV), zirconium(IV) or hafnium(IV) metallocene and an aluminoxane cocatalyst wherein the molar ratio of the aluminium in the aluminoxane to Group IVb metal in the metallocene is 150 or greater to form an aminated product of reaction.

22. A viscous, essentially terminally-unsaturated, essentially 1-olefin-containing copoly(1-olefin) formed from two or more C₃-C₂₀ 1-olefins and one or more non-1-olefins and having a number average molecular weight of 300 to 10,000 and a terminal vinylidine content of more than 80%, and obtainable by a process according to any of Claims 1-11.

23. The copolymer of Claim 22 formed from two or more C₃-C₁₀ 1-olefins.

24. The copolymer of Claim 23 formed from propylene and 1-butene.

25. The copolymer of Claim 22 formed from two or more 1-olefins selected from 1-butene, 1-pentene and 1-hexene.

26. The copolymer of any of Claims 22-25 having a terminal vinylidine content of more than 90%.

27. The copolymer of Claim 26 having a terminal vinylidine content of more than 95%.

28. The copolymer of any of Claims 22-27 having a number average molecular weight of 300 to 5000.

29. The copolymer of Claim 28 having a number average molecular weight of 400 to 3000.

30. A viscous, essentially terminally unsaturated, essentially 1-olefin-containing copoly(1-olefin) formed from at least one C₃-C₂₀ 1-olefin and an alpha-omega diene and having a number average molecular weight of 300 to 10,000 and a terminal vinylidine content of more than 80%, and obtainable by a process according to any of Claims 1-11.

31. Use of a copolymer according to any of Claims 22-29 in manufacture of lubricating oils, gasoline, sealants, caulks, adhesives, cosmetics and oil field chemicals.

32. Use of a copolymer according to any of Claims 22-29 in manufacture of a functionalized product, said product being made from the copolymer and a phenol, a substituted phenol, maleic anhydride, an epoxidizing agent, a hydrosilylating agent or carbon monoxide and hydrogen, said product being for use in lubricating oils, gasoline additives, sealants, caulks, adhesives and cosmetics.

33. Use of a copolymer according to any of Claims 22-29 in manufacture of an aminated product, by chlorinating the copolymer and then reacting it with an amine for use in fuel and motor oil compositions.

## Patentansprüche

1. Verfahren zur Bildung eines im wesentlichen endständig ungesättigten, viskosen, im wesentlichen 1-Olefin enthaltenden Poly(1-olefins) oder Copoly(1-olefins) vom zahlenmittleren Molekulargewicht zwischen 300 und 10000, das einen endständigen Vinylidingehalt von mehr als 80% aufweist, das die Polymerisierung eines Einsatzmaterials, das ein oder mehrere C₃- bis C₂₀-1-Olefin(e) enthält, unter Verwendung eines Katalysators, der ein Metallocen der Gruppe IVb des Periodensystems und einen Aluminoxan-Cokatalysator enthält, umfaßt, wobei das molare Verhältnis von Aluminium in dem Aluminoxan zu dem Metall der Gruppe IVb in dem Metallocen 150 oder mehr beträgt und das Einsatzmaterial wenigstens 1 Gew.-% Isobutylen enthält.

2. Verfahren nach Anspruch 1 unter Verwendung eines Katalysators, der eine Bis(cyclopentadienyl)- oder Bis(indenyl)titan(iv)-, -zirkonium(iv)- oder -hafnium(iv)-Verbindung enthält.

3. Verfahren nach Anspruch 2 unter Verwendung eines Katalysators, der Bis(cyclopentadienyl)zirkoniumdichlorid oder Bis(indenyl)zirkoniumdichlorid enthält.

4. Verfahren nach einem der Ansprüche 1 bis 3 unter Verwendung eines Cokatalysators, ausgewählt aus linearem Methylaluminoxan, zyklischem Methylaluminoxan und Gemischen hieraus.

5. Verfahren nach einem der Ansprüche 1 bis 4, durchgeführt unter Lösungs- oder Gasphasenbedingungen.

6. Verfahren zur Bildung eines im wesentlichen endständig ungesättigten, viskosen, im wesentlichen 1-Olefin-enthaltenden Poly(1-olefins) oder Copoly(1-olefins), umfassend die Polymerisierung unter Bedingungen der fluiden Phase eines Einsatzmaterials, das mehr als 1 Gew.-% von wenigstens einer flüchtigen Kohlenwasserstoffflüssigkeit, die ein Olefin außer einem 1-Olefin und weniger als 99 Gew.-%, bezogen auf gesamtes Einsatzmaterial, von einem oder mehreren C₃- bis C₂₀-1-Olefin(en) enthält, unter Verwendung eines Katalysatorsystems, das ein Titan(IV)-, Zirkonium(IV)- oder Hafnium(IV)metallocen enthält, und einen Aluminoxan-Cokatalysator, wobei das molare Verhältnis von Aluminium in dem Aluminoxan zum Metall der Gruppe IVb in dem Metallocen 150 oder mehr beträgt, zur Bildung eines Poly(1-olefins) oder Copoly(1-olefins) mit einem zahlenmittleren Molekulargewicht im Bereich von 300 bis 10000 und einem Gehalt an endständigem Vinylidin von mehr als 80%.

7. Verfahren nach Anspruch 6, wobei der Cokatalysator aus der Gruppe: lineares Methylaluminoxan, cyclisches Methylaluminoxan und Mischungen hieraus besteht.

8. Verfahren nach Anspruch 7, wobei das Katalysatorsystem eine Verbindung aus der Gruppe: Bis(cyclopentadienyl)- oder Bis(indenyl)titan(IV)-, -zirkonium(IV)- und -hafnium(IV)-Verbindungen enthält.

9. Verfahren nach Anspruch 6, wobei das Katalysatorsystem eine Verbindung aus der Gruppe: Bis(cyclopentadienyl)zirkoniumdichlorid und Bis(indenyl)zirkoniumdichlorid enthält.

10. Verfahren nach Anspruch 6, wobei das Einsatzmaterial wenigstens 0,1 Gew.-% Isobutylen, das Katalysatorsystem Bis(indenyl)zirkoniumdichlorid und als Cokatalysator Methylaluminoxan enthält und wobei ein Poly(1-olefin) oder Copoly(1-olefin) mit einem zahlendurchschnittlichen Molekulargewicht im Bereich von 300 bis 5000 und einem endständigen Vinylidingehalt von über 90% gebildet wird.

11. Verfahren nach Anspruch 6, wobei das Einsatzmaterial zusätzlich bis zu 70 Gew.-% eines Alpha-Omega-Diens enthält.

12. Verfahren zur stufenweisen Bildung von Polyisobutylen und einem im wesentlichen endständig ungesättigten, viskosen, im wesentlichen 1-Olefin-enthaltenden Poly(1-olefin) oder Copoly(1-olefin) eines zahlendurchschnittlichen Molekulargewichts zwischen 300 und 10000, das einen endständigen Vinilydingehalt von mehr als 80% aufweist, aus einem Einsatzmaterial, das mehr als 1 Gew.-% von einer flüchtigen Kohlenwasserstoffflüssigkeit enthält, die ein Olefin außer einem 1-Olefin ist, und weniger als 99%, bezogen auf gesamtes Einsatzmaterial, von einem oder mehreren C₃- bis C₂₀-1-Olefin(en) enthält, wobei das Einsatzmaterial zwischen 0,1 und 55 Gew.-% Isobutylen enthält, enthaltend die folgenden Stufen:
(a) Man polymerisiert das 1-Olefin unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung von Poly(1-olefin) oder Copoly(1-olefin); und
(b) man polymerisiert das Isobutylen mit einem Säurekatalysator zur Bildung von Polyisobutylen.

13. Verfahren nach Anspruch 12, wobei das Katalysatorsystem eine Bis(indenyl)zirkonium(IV)-Verbindung enthält.

14. Verfahren nach Anspruch 12, wobei das Metallocen Bis(indenyl)zirkoniumdichlorid ist.

15. Produkt, gebildet durch Reaktion von Phenol oder substituiertem Phenol mit im wesentlichen endständig ungesättigtem, viskosem, im wesentlichen 1-Olefin enthaltendem Poly(1-olefin) oder Copoly(1-olefin) mit einem zahlenmittleren Molekulargewicht im Bereich von 300 bis 10000 und einem endständigen Vinilydingehalt von mehr als 80%, wobei das Poly(1-olefin) oder Copoly(1-olefin) aus einem Einsatzmaterial hergestellt ist, das mehr als 1 Gew.-% von wenigstens einer flüchtigen Kohlenwasserstoffflüssigkeit, die ein Olefin mit Ausnahme eines 1-Olefins ist und weniger als 99 Gew.-%, bezogen auf gesamtes Einsatzmaterial, von einem oder mehreren C₃- bis C₂₀-1-Olefin(en) enthält, unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung eines weitgehend paraalkylierten Reaktionsprodukts.

16. Produkt, gebildet aus der Reaktion von Wasserstoffperoxid oder einer Persäure mit im wesentlichen endständig ungesättigtem, viskosem, im wesentlichen 1-Olefin enthaltendem Poly(1-olefin) oder Copoly(1-olefin) mit einem zahlendurchschnittlichen Molekulargewicht im Bereich von 300 bis 10000 und endständigem Vinilydingehalt von mehr als 80%, wobei das Poly(1-olefin) oder Copoly(1-olefin) hergestellt ist aus einem Einsatzmaterial, das mehr als 1 Gew.-% von wenigstens einer flüchtigen Kohlenwasserstoffflüssig-keit, die ein Olefin außer einem 1-Olefin ist und weniger als 99 Gew.-%, bezogen auf gesamtes Einsatzmaterial, eines oder mehrerer C₃- bis C₂₀-1-Olefin(e) enthält unter Verwendung eines Katalysatorsystems, das Bis(indenyl)zirkonium(IV)dichlorid und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung des entsprechenden Epoxid-Reaktionsproduktes.

17. Produkt, gebildet durch Reaktion eines Silyliermittels, das wenigstens eine Silicium-Wasserstoff-Bindung enthält, mit im wesentlichen endständig ungesättigtem, viskosem, im wesentlichen 1-Olefin enthaltenden Poly(1-olefin) oder Copoly(1-olefin) mit einem zahlenmittleren Molekulargewicht im Bereich von 300 bis 10000 und einem endständigen Vinylidingehalt von mehr als 80%, wobei das Poly(1-olefin) oder Copoly(1-olefin) aus einem Einsatzmaterial gebildet ist, das mehr als 1 Gew.-% von wenigstens einer flüchtigen Kohlenwasserstoffflüssigkeit, die ein Olefin außer einem 1-Olefin ist, und weniger als 99 Gew.-%, bezogen auf gesamtes Einsatzmaterial, von einem oder mehreren C₃- bis C₂₀-1-Olefin(en) unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung des entsprechenden endständig silylierten Poly(1-olefins) oder Copoly(1-olefins) als Reaktionsprodukt.

18. Produkt, gebildet aus der Reaktion von Maleinsäureanhydrid mit im wesentlichen endständig ungesättigtem, viskosem, im wesentlichen 1-Olefin enthaltenden Poly(1-olefin) oder Copoly(1-olefin) mit einem zahlenmittleren Molekulargewicht im Bereich von 300 bis 10000 und einem endständigen Vinylidingehalt von mehr als 80%, wobei das Poly(1-olefin) oder Copoly(1-olefin) aus einem Einsatzmaterial gebildet ist, das mehr als 1 Gew.-% von wenigstens einer flüchtigen Kohlenwasserstoffflüssigkeit, die ein Olefin außer einem 1-Olefin ist, und weniger als 99 Gew.-%, bezogen auf gesamtes Einsatzmaterial, von einem oder mehreren C₃- bis C₂₀-1-Olefin(en) enthält unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung des entsprechenden Bernsteinsäureanhydrids als Reaktionsprodukt.

19. Produkt, gebildet durch Reaktion von Kohlenmonoxid und Wasserstoff mit im wesentlichen endständig ungesättigtem, viskosem, im wesentlichen 1-Olefin enthaltendem Poly(1-olefin) oder Copoly(1-olefin) mit einem zahlenmittleren Molekulargewicht im Bereich von 300 bis 10000 und einem endständigen Vinylidingehalt von mehr als 80%, wobei das Poly(1-olefin) oder Copoly(1-olefin) aus einem Einsatzmaterial gebildet ist, das mehr als 1 Gew.-% von wenigstens einer flüchtigen Kohlenwasserstoffflüssigkeit, die ein Olefin außer einem 1-Olefin ist, und weniger als 99 Gew.-%, bezogen auf gesamtes Einsatzmaterial, von einem oder mehreren C₃- bis C₂₀-1-Olefin(en) enthält unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung des entsprechenden Alkohols als Reaktionsprodukt.

20. Produkt, gebildet aus Reaktion von Wasserstoff mit im wesentlichen endständig ungesättigtem, viskosem, im wesentlichen 1-Olefin enthaltendem Poly(1-olefin) oder Copoly(1-olefin) mit einem zahlenmittleren Molekulargewicht im Bereich von 300 bis 10000 und einem endständigen Vinylidingehalt von mehr als 80%, wobei das Poly(1-olefin) oder Copoly(1-olefin) aus einem Einsatzmaterial gebildet ist, das mehr als 1 Gew.-% von wenigstens einer flüchtigen Kohlenwasserstoffflüssigkeit, die ein Olefin außer einem 1-Olefin ist, und weniger als 99 Gew.-%, bezogen auf gesamtes Einsatzmaterial, von einem oder mehreren C₃- bis C₂₀-1-Olefin(en) enthält unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung eines weitgehend gesättigten Reaktionsproduktes.

21. Produkt, gebildet durch Reaktion eines aliphatischen Diamins mit chloriertem Polymer, gebildet durch Reaktion von Chlor mit im wesentlichen endständig ungesättigtem, viskosem, im wesentlichen 1-Olefin enthaltenden Poly(1-olefin) oder Copoly(1-olefin) mit einem zahlenmittleren Molekulargewicht im Bereich von 300 bis 10000 und einem endständigen Vinylidingehalt von mehr als 80%, wobei das Poly(1-olefin) oder Copoly(1-olefin) aus einem Einsatzmaterial gebildet ist, das mehr als 1 Gew.-% von wenigstens einer flüchtigen Kohlenwasserstoffflüssigkeit, die ein Olefin außer einem 1-Olefin ist, und weniger als 99 Gew.-%, bezogen auf gesamtes Einsatzmaterial, von einem oder mehreren C₃- bis C₂₀-1-Olefin(en) enthält unter Verwendung eines Katalysatorsystems, das ein Titan(IV)-, Zirkonium(IV)- oder Hafnium(IV)metallocen und einen Aluminoxan-Cokatalysator enthält, wobei das molare Verhältnis von Aluminium in dem Aluminoxan zum Metall der Gruppe IVb in dem Metallocen 150 oder mehr beträgt, zur Bildung eines Amins als Reaktionsprodukt.

22. Viskoses, im wesentlichen endständig ungesättigtes, im wesentlichen 1-Olefin enthaltendes Copoly(1-olefin), gebildet aus zwei oder mehreren C₃-C₂₀-1-Olefinen und einem oder mehreren Nicht-1-Olefin(en) mit einem zahlendurchschnittlichen Molekulargewicht von 300 bis 10000 und einem endständigen Vinylidingehalt von über 80%, erhältlich durch ein Verfahren nach einem der Ansprüche 1 bis 11.

23. Copolymer nach Anspruch 22, gebildet aus zwei oder mehreren C₃-C₁₀-1-Olefinen.

24. Copolymer nach Anspruch 23, gebildet aus Propylen und 1-Buten.

25. Copolymer nach Anspruch 22, gebildet aus zwei oder mehreren 1-Olefinen, ausgewählt aus 1-Buten, 1-Penten und 1-Hexen.

26. Copolymer nach einem der Ansprüche 22 bis 25 mit einem Gehalt an endständigem Vinylidin von mehr als 90%.

27. Copolymer nach Anspruch 26 mit einem Gehalt an endständigem Vinylidin von mehr als 95%.

28. Copolymer nach einem der Ansprüche 22 bis 27 mit einem zahlenmittleren Molekulargewicht von 300 bis 5000.

29. Copolymer nach Anspruch 28 mit einem zahlendurchschnittlichen Molekulargewicht von 400 bis 3000.

30. Viskoses, im wesentlichen endständig ungesättigtes, im wesentlichen 1-Olefin enthaltendes Copoly(1-olefin), gebildet aus wenigstens einem C₃-C₂₀-1-Olefin und einem Alpha-Omega-Dien mit einem zahlendurchschnittlichen Molekulargewicht von 300 bis 10000 und einem Gehalt an endständigem Vinylidin von mehr als 80%, erhalten durch ein Verfahren nach einem der Ansprüche 1 bis 11.

31. Verwendung eines Copolymers nach einem der Ansprüche 22 bis 29 bei der Herstellung von Schmierölen, Benzin, Dichtungsmitteln, Dichtungsmassen, Klebstoffen, kosmetischen Produkten und Ölfeldchemikalien.

32. Verwendung eines Copolymers nach einem der Ansprüche 22 bis 29 zur Herstellung eines funktionalisierten Produktes, wobei das Produkt aus dem Copolymer und einem Phenol, einem substituierten Phenol, Maleinsäureanhydrid, einem Epoxydierungsmittel, einem Hydrosilylierungsmittel oder Kohlenmonoxid und Wasserstoff gemacht ist, und wobei das Produkt in Schmierölen, Benzinzusätzen, Dichtungsmaterialien, Dichtungsmitteln, Klebstoffen und kosmetischen Produkten verwendet wird.

33. Verwendung eines Copolymers nach einem der Ansprüche 22 bis 29 bei der Herstellung eines aminierten Produkts durch Chlorierung des Copolymers und anschließende Reaktion mit einem Amin zur Verwendung in Kraftstoff und Motorenölzusammensetzungen.

## Revendications

1. Procédé pour former une poly(1-oléfine) ou une copoly(1-oléfine) visqueuse contenant essentiellement une 1-oléfine, essentiellement insaturée en position terminale ayant un poids moléculaire moyen en nombre compris entre 300 et 10.000 qui présente une teneur en vinylidine terminale supérieure à 80%, qui comprend la polymérisation d'une charge d'alimentation comprenant une ou plusieurs 1-oléfines en C₃₋₂₀ avec un catalyseur comprenant un métallocène du Groupe IVb du Tableau Périodique et un cocatalyseur de type aluminoxane, dans lequel le rapport molaire de l'aluminium dans l'aluminoxane au métal du Groupe IVb dans le métallocène est de 150 ou plus, cette charge contenant au moins 1% en poids d'isobutylène.

2. Procédé suivant la revendication 1 utilisant un catalyseur comprenant un composé bis-(cyclopentadiényl) ou bis-(indényl)-titane (IV), -zirconium (IV) ou -hafnium (IV).

3. Procédé suivant la revendication 2 utilisant un catalyseur comprenant du dichlorure de bis-(cyclopentadiényl)zirconium ou du dichlorure de bis-(indényl)-zirconium.

4. Procédé suivant l'une quelconque des revendications 1 à 3 utilisant un cocatalyseur choisi parmi un méthylaluminoxane linéaire, un méthylaluminoxane cyclique et leurs mélanges.

5. Procédé suivant l'une quelconque des revendications 1 à 4 mis en oeuvre dans des conditions en solution ou en phase gazeuse.

6. Procédé pour former une poly(1-oléfine) ou une copoly(1-oléfine) visqueuse contenant essentiellement une 1-oléfine, essentiellement insaturée en position terminale, lequel procédé comprend la polymérisation dans des conditions en phase fluide d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale, d'une ou plusieurs 1-oléfines en C₃₋₂₀ avec un système catalytique comprenant un métallocène de titane (IV), de zirconium (IV) ou d'hafnium (IV) et un cocatalyseur de type aluminoxane, dans lequel le rapport molaire de l'aluminium dans l'aluminoxane au métal du Groupe IVb dans le métallocène est de 150 ou plus, de façon à former une poly(1-oléfine) ou une copoly(1-oléfine) ayant un poids moléculaire moyen en nombre compris dans la gamme de 300 à 10.000 et une teneur en vinylidine terminale supérieure à 80%.

7. Procédé suivant la revendication 6, dans lequel le cocatalyseur est choisi dans le groupe consistant en méthylaluminoxane linéaire, méthylaluminoxane cyclique et leurs mélanges.

8. Procédé suivant la revendication 7, dans lequel le système catalytique comprend un élément choisi dans le groupe consistant en composés bis-(cyclopentadiényl) ou bis-(indényl)-titane (IV), -zirconium (IV) et -hafnium (IV).

9. Procédé suivant la revendication 6, dans lequel le système catalytique comprend un élément choisi dans le groupe consistant en dichlorure de bis-(cyclopentadiényl)-zirconium et dichlorure de bis-(indényl)-zirconium.

10. Procédé suivant la revendication 6, dans lequel la charge d'alimentation contient au moins 0,1% en poids d'isobutylène, le système catalytique comprend du dichlorure de bis-(indényl)zirconium et un méthylaluminoxane comme cocatalyseur, et dans lequel il est formé une poly(1-oléfine) ou une copoly(1-oléfine) qui a un poids moléculaire moyen en nombre compris dans la gamme de 300 à 5000 et une teneur en vinylidine terminale supérieure à 90%.

11. Procédé suivant la revendication 6, dans lequel la charge d'alimentation contient jusqu'à 70% en poids d'un alpha-oméga diène.

12. Procédé pour former successivement un polyisobutylène et une poly(1-oléfine) ou une copoly(1-oléfine) visqueuse, contenant essentiellement une 1-oléfine, essentiellement insaturée en position terminale, ayant un poids moléculaire moyen en nombre compris entre 300 et 10.000 qui présente une teneur en vinylidine terminale supérieure à 80%, à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀, la charge d'alimentation contenant entre 0,1 et 55% en poids d'isobutylène, lequel procédé comprend les étapes :
(a) de polymérisation de la 1-oléfine avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, pour former une poly(1-oléfine) ou une copoly(1-oléfine) ; et
(b) de polymérisation de l'isobutylène avec un catalyseur acide pour former un polyisobutylène.

13. Procédé suivant la revendication 12, dans lequel le système catalytique comprend un composé bis-(indényl)-zirconium (IV).

14. Procédé suivant la revendication 12, dans lequel le métallocène est le dichlorure de bis-(indényl)-zirconium.

15. Produit formé par réaction de phénol ou de phénol substitué avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former un produit réactionnel largement para-alkylé.

16. Produit formé par réaction de peroxyde d'hydrogène ou d'un peracide avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant du dichlorure de bis-(indényl)-zirconium (IV) et un aluminoxane comme cocatalyseur, dans lequel le rapport molaire de l'aluminium dans l'aluminoxane au métal du Groupe IVb dans le métallocène est de 150 ou plus, de façon à former le produit réactionnel époxy correspondant.

17. Produit formé par réaction d'un agent de silylation contenant au moins une liaison silicium-hydrogène avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former comme produit réactionnel, la poly(1-oléfine) ou la copoly(1-oléfine) correspondante silylée en position terminale.

18. Produit formé par réaction de l'anhydride maléique avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former comme produit réactionnel l'anhydride succinique correspondant.

19. Produit formé par réaction de monoxyde de carbone et d'hydrogène avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former comme produit réactionnel l'alcool correspondant.

20. Produit formé par réaction d'hydrogène avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former un produit réactionnel largement saturé.

21. Produit formé par réaction d'une diamine aliphatique avec un polymère chloré formé par réaction de chlore avec une poly(1-oléfine) ou une copoly(1-oléfine) visqueuse contenant essentiellement une 1-oléfine, essentiellement insaturée en position terminale, ayant un poids moléculaire moyen en nombre compris dans la gamme de 300 à 10.000 et une teneur en vinylidine terminale supérieure à 80%, laquelle poly(1-oléfine) ou copoly(1-oléfine) est préparée à partir d'une charge d'alimentation comprenant plus de 1% en poids d'au moins un liquide hydrocarboné volatil qui est une oléfine autre qu'une 1-oléfine et moins de 99% en poids par rapport à la charge d'alimentation totale d'une ou plusieurs 1-oléfines en C₃₋₂₀ avec un système catalytique comprenant un métallocène de titane (IV), de zirconium (IV) ou d'hafnium (IV) et un aluminoxane comme cocatalyseur, dans lequel le rapport molaire de l'aluminium dans l'aluminoxane au métal du Groupe IVb dans le métallocène est de 150 ou plus, de façon à former un produit réactionnel aminé.

22. Copoly(1-oléfine) visqueuse contenant essentiellement une 1-oléfine, essentiellement insaturée en position terminale, ayant un poids moléculaire moyen en nombre compris entre 300 et 10.000 et une teneur en vinylidine terminale supérieure à 80%, qui peut être obtenue par un procédé suivant l'une quelconque des revendications 1 à 11.

23. Copolymère suivant la revendication 22 formé à partir de deux ou plusieurs 1-oléfines en C₃₋₁₀.

24. Copolymère suivant la revendication 23 formé à partir de propylène et de 1-butène.

25. Copolymère suivant la revendication 22 formé à partir de deux ou plusieurs 1-oléfines choisies parmi le 1-butène, le 1-pentène et le 1-hexène.

26. Copolymère suivant l'une quelconque des revendications 22 à 25 ayant une teneur en vinylidine terminale supérieure à 90%.

27. Copolymère suivant la revendication 26 ayant une teneur en vinylidine terminale supérieure à 95%.

28. Copolymère suivant l'une quelconque des revendications 22 à 27 ayant un poids moléculaire moyen en nombre de 300 à 5000.

29. Copolymère suivant la revendication 28 ayant un poids moléculaire moyen en nombre de 400 à 3000.

30. Copoly(1-oléfine) visqueuse contenant essentiellement une 1-oléfine, essentiellement insaturée en position terminale, formée à partir d'au moins une 1-oléfine en C₃₋₂₀ et d'un alpha-oméga diène, ayant un poids moléculaire moyen en nombre de 300 à 10.000 et une teneur en vinylidine terminale supérieure à 80%, qui peut être obtenue par un procédé selon l'une quelconque des revendications 1 à 11.

31. Utilisation d'un copolymère suivant l'une quelconque des revendications 22 à 29 dans la fabrication d'huiles de graissage, d'essence, de joints, de calfatages, d'adhésifs, de cosmétiques et de produits chimiques pour gisements de pétrole.

32. Utilisation d'un copolymère suivant l'une quelconque des revendications 22 à 29 dans la fabrication d'un produit fonctionnalisé, ledit produit étant obtenu à partir du copolymère et d'un phénol, d'un phénol substitué, d'anhydride maléique, d'un agent d'époxydation, d'un agent d'hydrosilylation ou du monoxyde de carbone et d'hydrogène, ledit produit étant utile pour des huiles de graissage, des additifs d'essences, des joints, des calfatages, des adhésifs et des cosmétiques.

33. Utilisation d'un copolymère suivant l'une quelconque des revendications 22 à 29 dans la fabrication d'un produit aminé, par chloration du copolymère et ensuite réaction de celui-ci avec une amine pour être utilisé dans des compositions pour carburants et huiles pour moteur.
